# EUROPÄISCHE PATENTSCHRIFT

(11) **EP 4 534 171 B1**
(45) Veröffentlichungstag und Bekanntmachung des Hinweises auf die Patenterteilung: **04.11.2026**
(21) Anmeldenummer: 24203075.7
(22) Anmeldetag: 27.09.2024
(51) Int. Cl.: B01D 29/21, B01D 29/92, B01D 35/18

(54) **FILTERELEMENT, FILTERSYSTEM UND VERFAHREN ZUR HERSTELLUNG EINES FILTERELEMENTS**
FILTER ELEMENT, FILTER SYSTEM AND METHOD FOR PRODUCING A FILTER ELEMENT
ÉLÉMENT FILTRANT, SYSTÈME FILTRANT ET PROCÉDÉ DE FABRICATION D'UN ÉLÉMENT FILTRANT

(30) Priorität: 04.10.2023 DE 102023127009
(43) Veröffentlichungstag der Anmeldung: 09.04.2025
(73) Patentinhaber: MANN+HUMMEL GmbH, 71636 Ludwigsburg (DE)
(72) Erfinder: OPRISCH, Christine, 71636 Ludwigsburg (DE)
(74) Vertreter: Mann + Hummel Intellectual Property

(56) Entgegenhaltungen:
- EP-A1- 2 353 691
- DE-A1- 102014 015 613
- FR-A1- 2 868 331
- FR-A1- 2 929 858
- US-A1- 2012 132 582
- US-A1- 2016 030 865

## Beschreibung

### Technisches Gebiet

Die Erfindung betrifft ein Filterelement, ein Filtersystem sowie ein Verfahren zur Herstellung eines Filterelements, insbesondere eines Filterelements für eine Harnstoff-Wasser-Lösung.

### Stand der Technik

EP 1593419 A1 offenbart ein Filterelement für den Einbau in einen Flüssigkeitsfilter, insbesondere für eine Harnstoff-Wasser-Lösung. Das Filterelement ist in einem Gehäusetopf angeordnet, wobei ein Gehäusedeckel dichtend mit dem Gehäusetopf verschraubt ist. Das Filterelement weist eine erste Endscheibe und eine zweite Endscheibe auf, wobei zwischen die Endscheiben ein plissiertes Filtermedium eingebracht ist. Die Endscheiben sind über ein Stützelement miteinander verbunden, wobei das Stützelement radiale Relativbewegungen zwischen den Endscheiben verhindert. Dabei ist das Stützelement einstückig mit der zweiten Endscheibe ausgebildet. In axialer Richtung verfügt das Stützelement über Schnapphaken, welche die erste Endscheibe mit der zweiten Endscheibe verliersicher verbindet. Durch diese Verbindung kann, durch Ziehen an der ersten Endscheibe, die zweite Endscheibe sicher aus dem Gehäusetopf entnommen werden.

Aus WO 2006/010987 A1 ist ein Filterelement bekannt, bei dem eine Endscheibe mit Schnapphaken in Ausnehmungen des Stützelements des Filterelements hineinragt.

US 2012/132582 A1 offenbart eine Filtereinrichtung zur Flüssigkeitsfilterung, umfassend: ein Filterelement mit einem Innenraum zur Aufnahme von Flüssigkeit, sowie ein Ausgleichselement aus elastisch deformierbarem Material zur Aufnahme eines sich beim Gefrieren der Flüssigkeit vergrößernden Flüssigkeitsvolumens. Das Ausgleichselement ist in dem Innenraum angeordnet, und zwischen dem Ausgleichselement und dem Filterelement ist ein Spalt, insbesondere ein Ringspalt, für die Aufnahme der Flüssigkeit gebildet.

US 2016/030865 A1 beschreibt eine Hülse, die Teil eines Flüssigkeitsfilters ist, umfassend ein Filterelement, eine Endkappe, die über einem Ende des Filterelements liegt, ein Zentralrohr, bei dem ein Ende an der Endkappe befestigt ist, ein Vorspannelement und ein Überdruckventil mit einem Ventilkolben mit einem Kopf, der durch das Vorspannelement in Eingriff mit einem Ventilsitz vorgespannt ist, der durch eine Unterseite der Endkappe gebildet wird. Der Ventilsitz ist so beschaffen, dass er eine Krümmung aufweist, die größer ist als die des Kopfes des Ventilkolbens. Eine zweite Endkappe liegt über einem anderen Ende des Filterelements, axial gegenüber der genannten Endkappe, und ist ebenfalls an dem Zentralrohr befestigt.

In DE 10 2014 015 613 A1 ist ein Hohlfilterelement mit einem Mittelrohr und mehrteiliger Fixiereinrichtung zum axialen Fixieren an der ersten Endscheibe und einer Verbindungseinrichtung zum Verschnappen mit der zweiten Endscheibe offenbart.

### Offenbarung der Erfindung

Eine Aufgabe der Erfindung ist es, ein verbessertes Filterelement zu schaffen, das günstig herstellbar ist.

Eine weitere Aufgabe besteht in der Schaffung eines Filtersystems mit einem solchen Filterelement.

Eine weitere Aufgabe besteht in der Schaffung eines Verfahrens zur Herstellung eines solchen Filterelements.

Die vorgenannte Aufgabe oder vorgenannten Aufgaben werden durch die Merkmale des unabhängigen Anspruchs oder der unabhängigen Ansprüche gelöst.

Nach einem Aspekt der Erfindung ist ein Filterelement zur Reinigung eines Fluids offenbart, insbesondere einer Harnstoff-Wasser-Lösung, aufweisend eine erste, insbesondere offene Endscheibe und eine zweite, insbesondere geschlossene Endscheibe, die in einer Längsrichtung voneinander beabstandet sind, wobei zwischen den Endscheiben ein Filtermediumkörper mit einem Filtermedium mit einem geschlossenen Umfang dichtend angeordnet ist, das einen Innenraum umschließt, wobei in dem Innenraum ein Stützelement angeordnet ist, welches eine Axialsicherung zur Wirkverbindung mit einer Axialsicherung der ersten Endscheibe aufweist, wobei das Stützelement mit einem Fortsatz mit seiner Axialsicherung in einen sich in Längsrichtung von dem Filtermediumkörper weg erstreckenden Stutzen mit der Axialsicherung der ersten Endscheibe ragt. Die zweite Endscheibe weist ein in den Innenraum ragendes Ringelement mit einer Kontur auf, die mit einer Gegenkontur des Stützelements einen Endanschlag der zweiten Endscheibe beim Verbinden des Filtermediumkörpers mit der zweiten Endscheibe bildet.

Nach einem weiteren Aspekt der Erfindung ist ein Filtersystem offenbart, insbesondere für Harnstoff-Wasser-Lösungen, mit einem erfindungsgemäßen Filterelement, mit einem Gehäuse, das einen Einlass und einen Auslass aufweist, wobei das Gehäuse einen Gehäusetopf und einen Gehäusedeckel aufweist, wobei das Filterelement dichtend zwischen Einlass und Auslass angeordnet ist.

Nach einem weiteren Aspekt der Erfindung ist ein Verfahren zur Herstellung eines erfindungsgemäßen Filterelements offenbart, gekennzeichnet durch ein Bereitstellen eines, insbesondere plissierten, Filtermediumkörpers mit einem geschlossenen Umfang, das einen Innenraum umschließt; ein Bereitstellen eines Stützelements mit einem Dämpfer-Aufnahmebereich und einem Körper-Aufnahmebereich; ein Einlegen eines Verdrängungskörpers in den Körper-Aufnahmebereich im Inneren des Stützelements; ein Anbringen eines Dämpfungselements an dem Dämpfer-Aufnahmebereich an einer Außenseite des Stützelements; ein Einlegen des Stützelements in den Innenraum des Filtermediumkörpers mit Verdrängungskörper im Körper-Aufnahmebereich im Inneren des Stützelements und mit Dämpfungselement am Dämpfer-Aufnahmebereich; ein Positionieren einer ersten Endscheibe an einer Stirnseite und einer zweiten Endscheibe an einer gegenüberliegenden Stirnseite des Filtermediumkörpers; sowie ein Zusammenführen von erster Endscheibe, Filtermediumkörper und zweiter Endscheibe unter Einwirken eines Schweißprozesses, insbesondere eines Spiegelschweißprozesses, bis der Filtermediumkörper mit seinen Stirnseiten mit den Endscheiben dicht verschmolzen ist.

Günstige Ausgestaltungen und Vorteile der Erfindung ergeben sich aus den weiteren Ansprüchen, der Beschreibung und der Zeichnung.

Es wird nach einem Aspekt der Erfindung ein Filterelement zur Reinigung eines Fluids, insbesondere einer Harnstoff-Wasser-Lösung, vorgeschlagen, aufweisend eine erste, insbesondere offene Endscheibe und eine zweite, insbesondere geschlossene Endscheibe, die in einer Längsrichtung voneinander beabstandet sind. Zwischen den Endscheiben ist ein Filtermediumkörper mit einem Filtermedium mit einem geschlossenen Umfang dichtend angeordnet, das einen Innenraum umschließt, wobei in dem Innenraum ein Stützelement angeordnet ist, welches eine Axialsicherung zur Wirkverbindung mit einer Axialsicherung der ersten Endscheibe aufweist. Das Stützelement ragt mit einem Fortsatz mit seiner Axialsicherung in einen sich in Längsrichtung von dem Filtermediumkörper weg erstreckenden Stutzen mit der Axialsicherung der ersten Endscheibe. Die zweite Endscheibe weist ein in den Innenraum ragendes Ringelement mit einer Kontur auf, die mit einer Gegenkontur des Stützelements einen Endanschlag der zweiten Endscheibe beim Verbinden des Filtermediumkörpers mit der zweiten Endscheibe bildet.

Vorteilhaft kann ein Fügen der Endscheiben mit dem Filtermedium, insbesondere mittels Infrarotschweißen, insbesondere mittels Spiegelschweißen, in einem Prozessschritt erfolgen. Auf der Seite der ersten Endscheibe kann das Stützelement einen Absatz aufweisen, der als Endanschlag der ersten Endscheibe dient, wenn diese zum Filtermediumkörper geführt wird. Die zweite Endscheibe kann mit ihrer Kontur beim Zusammenführen von Filtermediumkörper und Endscheiben mit der Gegenkontur des Stützelements verrasten, so dass zum einen ein fester Endanschlag für die zweite Endscheibe bereitgestellt und gleichzeitig eine stabile Fixierung des Stützkörpers an der zweiten Endplatte erreicht ist. An der ersten Endscheibe kann bei einer Längenausdehnung des Filtermediumkörpers die Axialsicherung eine übermäßige Ausdehnung des Filtermediumkörpers wirksam begrenzen. Die Axialsicherung des Fortsatzes des Stützelements liegt erfindungsgemäß in Form von einem oder mehreren radial nach außen gerichteten Haken vor. Die Axialsicherung der ersten Endscheibe ist ein radial nach innen gerichteter Absatz, an dem die radial nach außen gerichteten Haken festhaken können, wenn die Endscheibe wegen einer Längenzunahme des Filtermediumkörpers, beispielsweise bei einer Flüssigkeitsaufnahme durch das Filtermedium, in Richtung der Haken sich bewegt. Optional kann die Axialsicherung der ersten Endscheibe durch eine oder mehrere Ausnehmungen an der Innenseite des Stutzens der ersten Endscheibe gebildet sein.

Nach einer günstigen Ausgestaltung des Filterelementes kann das Stützelement das Ringelement der zweiten Endscheibe übergreifen. Insbesondere kann das Stützelement mit seiner Gegenkontur über die Kontur des Ringelements der zweiten Endscheibe greifen. Die Kontur kann dann von radial außen in die radial nach außen weisende Gegenkontur des Ringelements eingreifen. Kontur und/oder Gegenkontur können jeweils auf Zähnen angeordnet sein. Dies hat den Vorteil, dass beim Zusammenführen von Stützelement und zweiter Endscheibe eine ausreichende Flexibilität der Zähne vorliegt, damit die zweite Endscheibe mit ihrem Ringelement in das Stützelement geschoben werden kann, bis Kontur und Gegenkontur verbunden sind. Kontur und Gegenkontur können beispielsweise einen Formschluss bilden.

Nach einer günstigen Ausgestaltung des Filterelementes können Kontur und Gegenkontur eine Rastverbindung bilden. Die Kontur kann beispielsweise ein gerundeter Vorsprung sein und die Gegenkontur eine Nut. Die Kontur in Form des gerundeten Vorsprungs kann formschlüssig in der Nut anliegen.

Nach einer günstigen Ausgestaltung des Filterelementes kann das Stützelement an der zweiten Endscheibe in seinem Inneren einen Körper-Aufnahmebereich für wenigstens einen Verdrängungskörper aufweisen. Bei Filterung einer Flüssigkeit, die bei niedrigen Temperaturen ausfrieren kann, kann sich das Volumen durch die erstarrende Flüssigkeit stark vergrößern. Der Verdrängungskörper ist durch die erstarrende Flüssigkeit komprimierbar und gleich somit die Volumenänderung der Flüssigkeit bei sinkenden Temperaturen aus. Damit wird eine Beschädigung des Filterelementes und/oder des Filtersystems verhindert.

Nach einer günstigen Ausgestaltung des Filterelementes kann der Verdrängungskörper aus einem Elastomer gebildet sein. Insbesondere kann der Verdrängungskörper aus EPDM (Ethylen-Propylen-Dien-Kautschuk) gebildet sein. Günstigerweise kann der Verdrängungskörper mit seinen elastischen Eigenschaften leicht in den Körper-Aufnahmebereich eingeführt werden. Ferner kann der Verdrängungskörper gegebenenfalls reversibel komprimiert werden, wenn das zu filternde Fluid ausfriert und wieder aufschmilzt.

Nach einer günstigen Ausgestaltung des Filterelementes kann das Stützelement zwischen der zweiten Endscheibe und der ersten Endscheibe einen Dämpfer-Aufnahmebereich zur Aufnahme wenigstens eines Dämpfungselements aufweisen. Insbesondere kann der Dämpfer-Aufnahmebereich an seiner Außenseite das wenigstens eine Dämpfungselement aufnehmen. Beispielsweise kann das wenigstens eine Dämpfungselement um den Dämpfer-Aufnahmebereich gelegt werden oder um den Dämpfer-Aufnahmebereich geklipst werden. Das wenigstens eine Dämpfungselement kann so ausgestaltet sein, dass es wenigstens bereichsweise durch das Stützelement durchgreift. Hier kann vorteilhaft ausgenutzt werden, dass das Stützelement üblicherweise eine gitterartige Wandung aufweist, so dass Durchbrüche im Stützelement vorliegen, durch die das wenigstens eine Dämpfungselement durchgreifen kann. Insbesondere kann der Dämpfer-Aufnahmebereich zwischen dem Körper-Aufnahmebereich und der ersten Endscheibe angeordnet sein. Vorteilhaft kann der Dämpfer-Aufnahmebereich benachbart zu dem Körper-Aufnahmebereich angeordnet sein. Der Dämpfer-Aufnahmebereich kann vorteilhaft unerwünschte Bewegungen eines in das Innere des Stützelements eingebrachten Heizelements, beispielsweise eines Heizstabs, verringern oder unterbinden. So lassen sich Beschädigungen des Filterelements im Betrieb bei Vibrationen des Filterelements und/oder des Heizstabs vermindern oder verhindern. Gleichzeitig kann ein eingebrachtes Heizelement vor Oberflächenbeschädigungen durch Reibung geschützt werden.

Nach einer günstigen Ausgestaltung des Filterelementes kann das Dämpfungselement als geschlitzter Ring ausgebildet sein. Das Dämpfungselement kann leicht in den Dämpfer-Aufnahmebereich eingeklipst werden. Insbesondere kann das Dämpfungselement als geschlitzter Ring ausgebildet sein, der mit Vorsprüngen von einer Außenseite des Stützelements her durch Durchbrüche im Stützelement durchgreift. Hierdurch kann das Dämpfungselement beispielsweise einen Heizer im Inneren des Stützelements umschließen. Der Durchgriff durch die Durchbrüche sichert das Dämpfungselement ferner an seiner Position im Dämpfer-Aufnahmebereich.

Nach einer günstigen Ausgestaltung des Filterelementes kann das Dämpfungselement aus einem Elastomer gebildet sein. Insbesondere kann das Dämpfungselement aus EPDM gebildet sein. Günstigerweise kann das Dämpfungselement mit seinen elastischen Eigenschaften leicht in den Dämpfer-Aufnahmebereich eingeführt werden. Ferner kann das Dämpfungselement ggf. reversibel komprimiert werden, wenn das zu filternde Fluid ausfriert und wieder aufschmilzt. Das Dämpfungselement kann eine glatte Oberfläche aufweisen, während es im Inneren Poren aufweist.

Nach einer günstigen Ausgestaltung des Filterelementes kann das Filtermedium des Filtermediumkörpers vollsynthetisch ausgebildet sein. Ein solches Filtermedium ist günstig beispielsweise zum Filtern eines Harnstoff-Wasser-Gemischs.

Es wird nach einem weiteren Aspekt der Erfindung ein Filtersystem, insbesondere für Harnstoff-Wasser-Lösungen, mit einem erfindungsgemäßen Filterelement, vorgeschlagen, mit einem Gehäuse, das einen Einlass und einen Auslass aufweist, wobei das Gehäuse einen Gehäusetopf und einen Gehäusedeckel aufweist, wobei das Filterelement dichtend zwischen Einlass und Auslass angeordnet ist.

Günstigerweise kann auch bei einem relativ langen Filtermediumkörper im Betrieb ein Längenzuwachs des Filtermediumkörpers außerhalb zulässiger Toleranzen beschränkt werden.

Nach einer günstigen Ausgestaltung des Filtersystems kann ein Heizelement, insbesondere ein Heizstab, in den Innenraum des Filtermediumkörpers eingeführt sein, wobei ein freies Ende des Heizelements von einem Dämpfungselement umgeben ist, das an einem Stützelement des Filterelements angeordnet ist. Vorteilhaft lassen sich unerwünschte Bewegungen des Filterelementes um das Heizelements im Betrieb vermindern oder unterbinden.

Es wird nach einem weiteren Aspekt der Erfindung ein Verfahren zur Herstellung eines erfindungsgemäßen Filterelements vorgeschlagen, gekennzeichnet durch ein Bereitstellen eines, insbesondere plissierten, Filtermediumkörpers mit einem Filtermedium mit einem geschlossenen Umfang, das einen Innenraum umschließt; ein Bereitstellen eines Stützelements mit einem Dämpfer-Aufnahmebereich und einem Körper-Aufnahmebereich; ein Einlegen eines Verdrängungskörpers in den Körper-Aufnahmebereich im Inneren des Stützelements; ein Anbringen eines Dämpfungselements an dem Dämpfer-Aufnahmebereich an einer Außenseite des Stützelements; ein Einlegen des Stützelements in den Innenraum des Filtermediumkörpers mit Verdrängungskörper im Körper-Aufnahmebereich im Inneren des Stützelements und mit Dämpfungselement am Dämpfer-Aufnahmebereich; ein Positionieren einer ersten Endscheibe an einer Stirnseite und einer zweiten Endscheibe an einer gegenüberliegenden Stirnseite des Filtermediums; sowie ein Zusammenführen von erster Endscheibe, Filtermediumkörper und zweiter Endscheibe unter Einwirken eines Schweißprozesses, insbesondere eines Spiegelschweißprozesses, bis der Filtermediumkörper mit seinen Stirnseiten mit den Endscheiben dicht verschmolzen ist.

Vorteilhaft kann das Zusammenfügen von Endscheiben und Filtermediumkörper in einem Prozessschritt erfolgen. Es kann verhindert werden, dass der Filtermediumkörper zu stark komprimiert wird.

Nach einer günstigen Ausgestaltung des Verfahrens kann eine Wirkverbindung einer Kontur der zweiten Endscheibe und einer Gegenkontur des Stützelements beim Schweißprozess als Endanschlag für die zweite Endscheibe dienen. Eine Länge des Filterelements kann innerhalb von zulässigen Fertigungstoleranzen hergestellt werden.

Dadurch, dass das Stützelement bereits vor dem Zusammenführen mit dem Verdrängungskörper und dem Dämpferelement versehen ist, kann eine Montage dieser Komponenten vereinfacht sein.

Nach einer günstigen Ausgestaltung des Verfahrens kann das Stützelement mit der zweiten Endscheibe während des Schweißvorgangs verklipst werden, indem eine Kontur der zweiten Endscheibe und eine Gegenkontur des Stützelements beim Zusammenführen von Endscheibe und Filtermediumkörper übereinander geschoben werden. Vorteilhaft kann die Kontur mit der Gegenkontur einen Formschluss bilden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der

Fachmann wird die Merkmale zweckmäßigerweise auch einzeln betrachten und zu sinnvollen weiteren Kombinationen zusammenfassen. Es zeigen beispielhaft:
- Figur 1: eine Ansicht eines Längsschnitts eines Filterelements nach einem Ausführungsbeispiel der Erfindung;
- Figur 2: in der Art einer Explosionsdarstellung eine Ansicht von Komponenten des Filterelements nach Fig. 1;
- Figur 3: eine perspektivische Ansicht eines Stützelements des Filterelements nach Fig. 1;
- Figur 4: eine perspektivische Ansicht eines Verdrängungskörpers eines Filterelements nach Fig. 1;
- Figur 5: eine perspektivische Ansicht eines Dämpfungselements eines Filterelements nach Fig. 1;
- Figur 6: eine perspektivische Ansicht einer ersten Endscheibe eines Filterelements nach Fig. 1;
- Figur 7: eine perspektivische Ansicht einer zweiten Endscheibe eines Filterelements nach Fig. 1;
- Figur 8: eine perspektivische Ansicht eines teilweise aufgeschnittenen Filterelements nach Fig. 1 mit eingesetztem Heizelement;
- Figur 9: einen Längsschnitt durch ein vereinfachtes Filtersystem mit dem Filterelement nach Fig. 8 mit eingesetztem Heizelement; und
- Figur 10: einen Verfahrensablauf zur Herstellung eines Filterelements nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

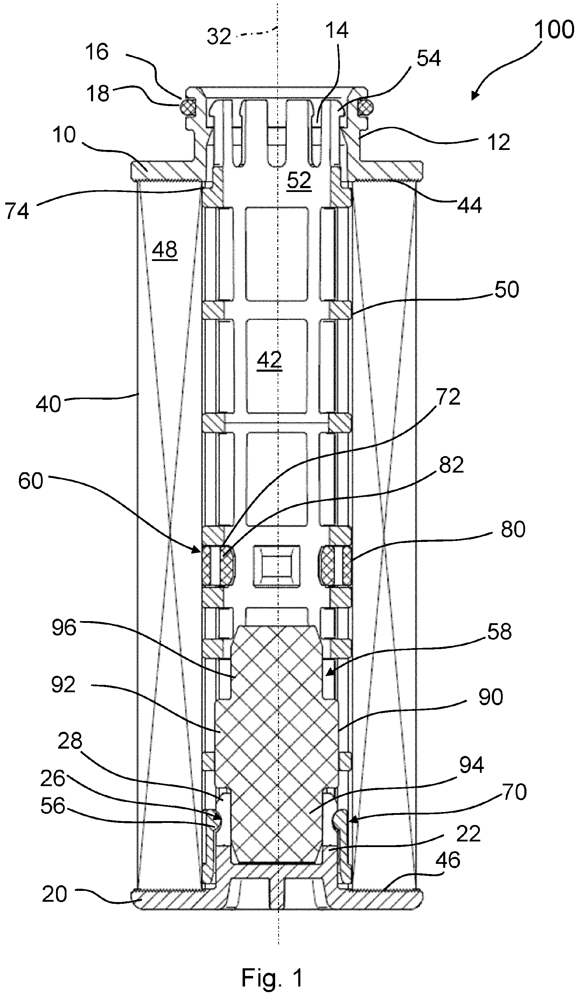

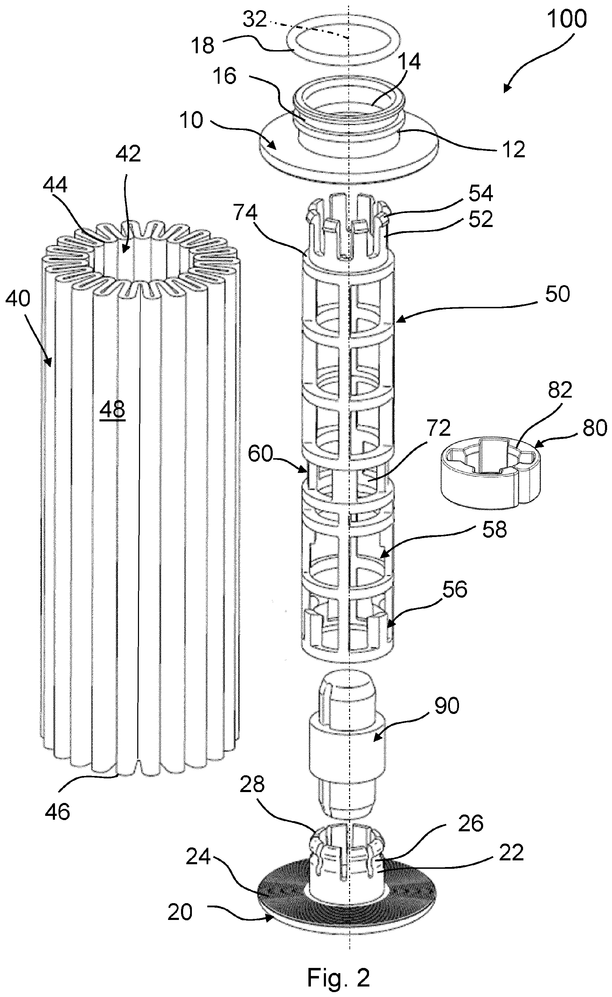

Figur 1 zeigt eine Ansicht eines Längsschnitts eines Filterelements 100 nach einem Ausführungsbeispiel der Erfindung. Figur 2 zeigt in der Art einer Explosionsdarstellung eine Ansicht von Komponenten des Filterelements 100 nach Figur 1.

Das Filterelement 100 dient zur Reinigung eines Fluids, insbesondere einer Harnstoff-Wasser-Lösung. Das Filterelement 100 weist eine erste Endscheibe 10 und eine zweite Endscheibe 20 auf, die einer Längsrichtung 32 voneinander beabstandet sind. Die erste Endscheibe 10 ist beispielsweise als offene Endscheibe 10 ausgebildet und eine zweite beispielsweise als geschlossene Endscheibe 20.

Zwischen den beiden Endscheiben 10, 20 ist ein Filtermediumkörper 40 mit einem Filtermedium 48 mit einem geschlossenen Umfang dichtend angeordnet, das einen Innenraum 42 umschließt.

Das Filtermedium 48 kann insbesondere ein vollsynthetisches Material sein. Bei einem zu filternden Fluid in Form einer Harnstoff-Wasser-Lösung zeigt ein solches Filtermedium 48 einen Längenzuwachs, der die Integrität des Filterelements 100 beeinträchtigen kann.

In dem Innenraum 42 ist ein Stützelement 50 angeordnet, welches eine Axialsicherung 54 zur Wirkverbindung mit einer Axialsicherung 14 der ersten Endscheibe 10 aufweist. Das Stützelement 50 weist Stege auf sowie Durchbrüche 72, durch die das Fluid durchtreten kann.

Die Axialsicherung 54 kann in Form von in Längsrichtung 32 nach außen weisenden Haken ausgebildet sein, die an einem Fortsatz 52 des Stützelements 50 in einen sich in Längsrichtung 32 von dem Filtermediumkörper 40 weg erstreckenden Stutzen 12 mit der Axialsicherung 14 der ersten Endscheibe 10 ragt. Die Axialsicherung 14 der ersten Endscheibe 10 kann insbesondere ein nach innen weisender Absatz in dem Stutzen 12 sein. Dehnt sich das Filtermedium 48 aus, können sich die Haken des Stützelements 50 an dem Absatz festlegen und eine weitere Längenzunahme verhindern.

Bei der Montage der ersten Endscheibe 10 kann Axialsicherung 14 der ersten Endscheibe 10 leicht über die als Haken ausgebildete Axialsicherung 54 des Stützelements 50 geschoben werden. Hierzu kann der Absatz an seiner Unterseite eine Schräge aufweisen, so dass die Haken leicht über den Absatz gleiten können.

Der Fortsatz 52 des Stützelements 50 weist einen geringeren Durchmesser als der angrenzende Bereich des Stützelements 50 auf, so dass ein umlaufender Absatz 74 gebildet ist, der bei der Montage als Endanschlag für die erste Endscheibe 10 dient.

Die zweite Endscheibe 20 weist ein in den Innenraum 42 ragendes Ringelement 22 mit einer Kontur 26 auf, die mit einer Gegenkontur 56 des Stützelements 50 einen Endanschlag 70 der zweiten Endscheibe 20 beim Verbinden des Filtermediumkörpers 40 mit der zweiten Endscheibe 20 bildet.

Das Stützelement 50 greift dabei über das Ringelement 22 der zweiten Endscheibe 20. Insbesondere kann das Stützelement 50 mit seiner Gegenkontur 56 über die Kontur 26 des Ringelements 22 der zweiten Endscheibe 20 greifen. Dabei bilden die Kontur 26 und Gegenkontur 56 eine Rastverbindung. Die Gegenkontur 56 des Stützelements 50 kann Zähne 55 umfassen, die Richtung Fortsatz 52 des Stützelements 50 weisen und die eine nach innen gerichtete Verdickung aufweisen.

Die Kontur 26 der zweiten Endscheibe kann ebenfalls Zähne 28 umfassen, die eine nach außen gerichtete komplementäre Struktur aufweisen, insbesondere eine Nut. Die Kontur 26 und die Gegenkontur 56 können einen Formschluss bilden, sodass die zweite Endscheibe 20 und das Stützelement 50 stabil miteinander verbunden sind.

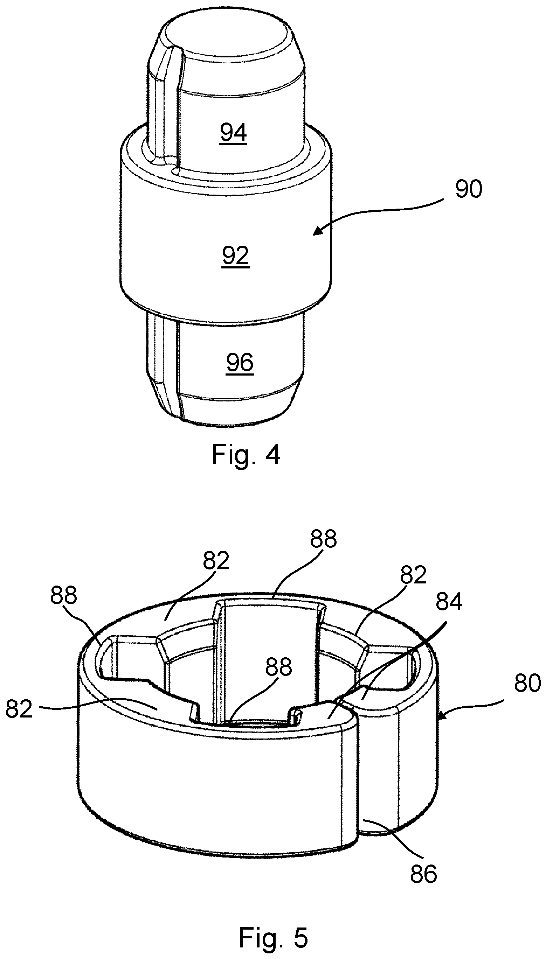

Das Stützelement 50 weist an dem der zweiten Endscheibe 20 zugewandten Ende in seinem Inneren einen Körper-Aufnahmebereich 58 für wenigstens einen Verdrängungskörper 90 auf, der in Figur 4 perspektivisch dargestellt ist.

Der Verdrängungskörper 90 ist vorzugsweise aus einem Elastomer gebildet, insbesondere aus EPDM. Der Verdrängungskörper 90 weist einen Zylinderbereich 92 auf, von dem sich in beide Richtungen jeweils ein Zapfen 94, 96 weg erstreckt (Figur 4). Die Zapfen 94, 96 weisen eine Einkerbung auf, die es erlaubt, Luft, die sich bei der Montage beim Eindrücken des Verdrängungskörpers 90 in die zweite Endscheibe 20 unter dem Verdrängungskörper 90 komprimieren würde, entweichen zu lassen.

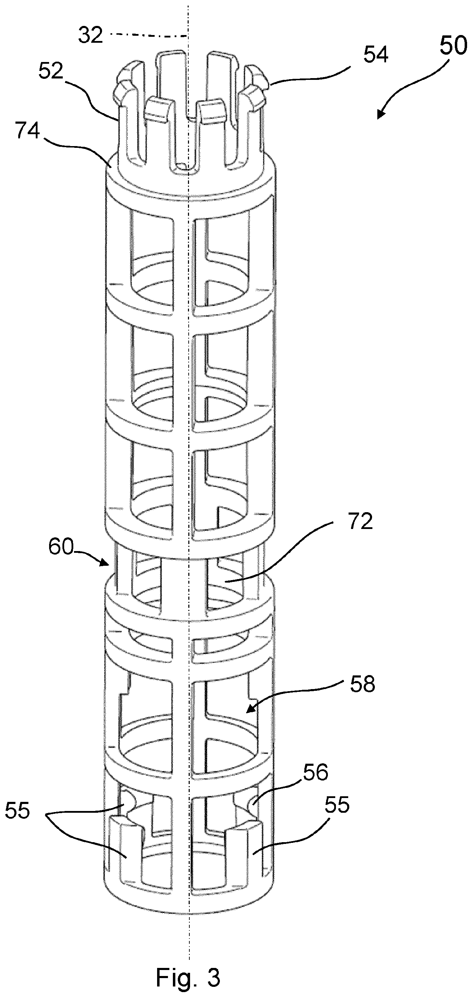

Figur 3 zeigt eine perspektivische Ansicht des Stützelements 50 des Filterelements 100 nach Figur 1 und 2.

Der Körper-Aufnahmebereich 58 ist in Richtung des Fortsatzes 52 des Stützkörpers 50 komplementär zu dem Verdrängungskörper 90 ausgebildet, so dass der Verdrängungskörper 90 leicht in das Innere des Stützkörpers eingeschoben werden kann, bis der Zylinderbereich 92 an einem nicht näher bezeichneten Absatz des Stützelements 50 anstößt.

An den Körper-Aufnahmebereich 58 schließt sich der Dämpfer-Aufnahmebereich 60 an, der an der Außenseite des Stützelements 50 in Form einer Einschnürung ausgebildet ist. In den Dämpfer-Aufnahmebereich 60 kann ein Dämpfungselement 80 eingefügt werden.

Das Dämpfungselement 80 ist in Figur 5 im Detail dargestellt. Das Dämpfungselement 80 ist als geschlitzter Ring ausgebildet und weist nach innen weisende, keilartige Vorsprünge 82 auf. Am Schlitz 86 des Dämpfungselements 80 liegt ein in zwei Hälften geteilter Vorsprung 84 vor. Wird das Dämpfungselement 80 im Dämpfer-Aufnahmebereich 60 um das Stützelement 50 gelegt, können die Vorsprünge 82 und der geteilte Vorsprung 84 von der Außenseite des Stützelements 50 her durch Durchbrüche 72 im Stützelement 50 durchgreifen. Das Dämpfungselement 80 ist dadurch axial gesichert. Gleichzeitig ist der Schlitz 86 durch den Durchbruch 72 gesichert und kann sich nicht öffnen.

Die Verbindungen 88 zwischen den Vorsprüngen 82, 84 sind im montierten Zustand ausreichend beabstandet von Stegen des Stützelements 50, so dass ein ausreichender Spalt für das Fluid bleibt.

Die Vorsprünge 82, 84 ragen in das Innere des Stützelements 50 hinein, so dass ein Element im Stützelement 50, beispielsweise ein Heizelement, von dem Dämpfungselement 80 in radialer Richtung stabilisiert werden kann.

Das Dämpfungselement 80 ist aus einem Elastomer gebildet, insbesondere aus EPDM.

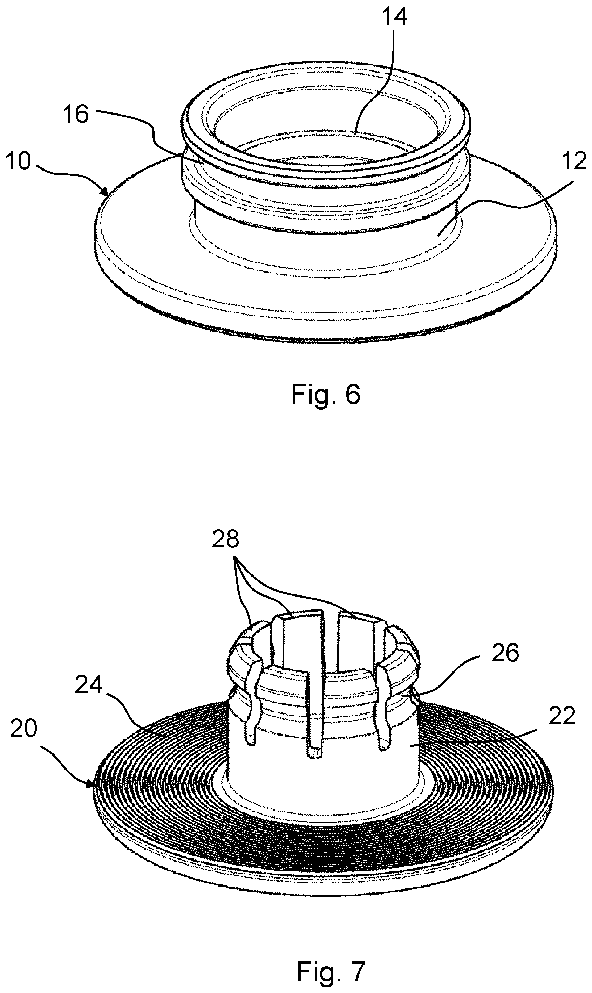

Figur 6 zeigt eine perspektivische Ansicht der ersten Endscheibe 10 des Filterelements 100 nach Figur 1. Der Stutzen 12 der ersten Endscheibe 10 weist im Inneren den Absatz als Axialsicherung 14 auf. An seiner Außenseite weist der Stutzen 12 eine Nut 16 zur Aufnahme eines Dichtrings 18 (Figur 1, 2, 8) auf.

Figur 7 zeigt eine perspektivische Ansicht der zweiten Endscheibe 20 des Filterelements 100 nach Figur 1. Auf ihrer Innenseite weist die zweite Endscheibe 20 eine konzentrische Rillenstruktur 24 auf, die bei der Verbindung mit dem Filtermedium 40 vorteilhaft ist.

Eine derartige Rillenstruktur ist zweckmäßigerweise auch bei der ersten Endscheibe 10 vorhanden.

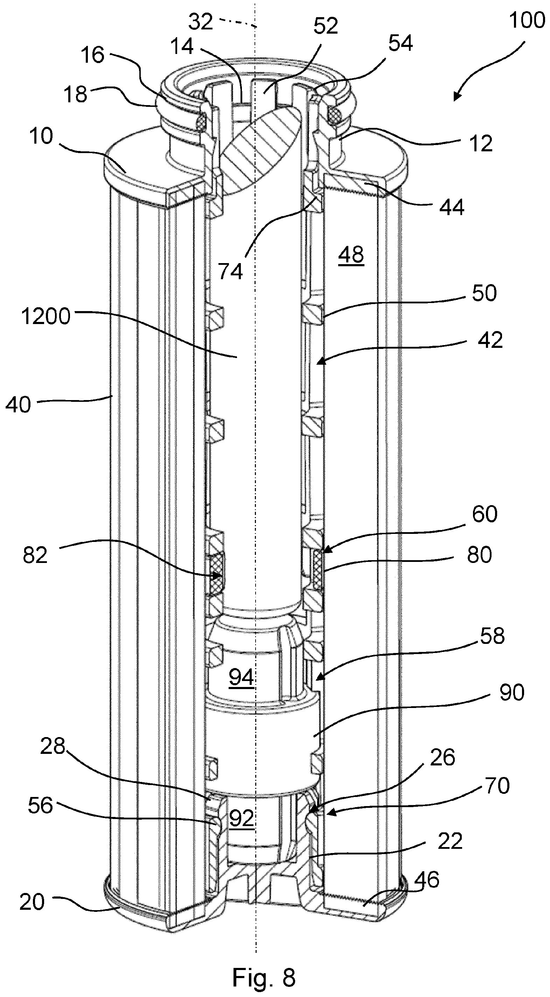

Figur 8 zeigt eine perspektivische Ansicht eines teilweise aufgeschnittenen Filterelements 100 nach Figur 1 mit eingesetztem teilweise abgeschnittenen Heizelement 1200. Das Heizelement 1200 ragt von der ersten Endscheibe 10 her in das Innere des Stützelements 50 und wird an seinem freien Ende in radialer Richtung von dem Dämpfungselement 80 und dessen Vorsprüngen 82, 84 abgestützt. Kommt es im Betrieb des Filterelements 100 zu Vibrationen, ist das Heizelement 1200 in seiner radialen Beweglichkeit eingeschränkt und der Filtermediumkörper 40 und das Stützelement 50 vor Beschädigungen geschützt.

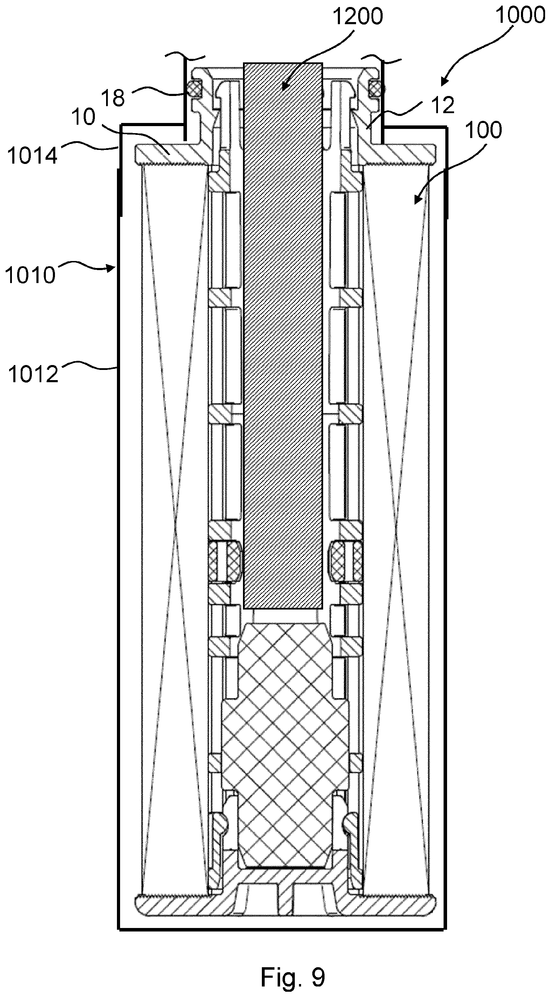

Figur 9 zeigt einen Längsschnitt durch ein vereinfacht dargestelltes Filtersystem 1000 mit dem Filterelement 100 nach Figur 8 mit eingesetztem Heizelement 1200.

Das Filtersystem 1000 weist ein Gehäuse 1010 mit einem Gehäusetopf 1012 und einem Gehäusedeckel 1014 auf mit einem nicht dargestellten Einlass und Auslass für das Fluid, wobei das Filterelement 100 dichtend zwischen Einlass und Auslass angeordnet ist.

Das Filterelement 100 ist im Gehäusetopf 1012 angeordnet und wird beim Verschließen des Gehäuses 1010 mit dem Stutzen 12 der ersten Endscheibe 10 in den Gehäusedeckel 1014 eingeführt, wobei der Dichtring 18 gegen den Gehäusedeckel 1014 abdichtet. Gehäusedeckel 1014 und Gehäusetopf 1012 können beispielsweise verschraubt sein.

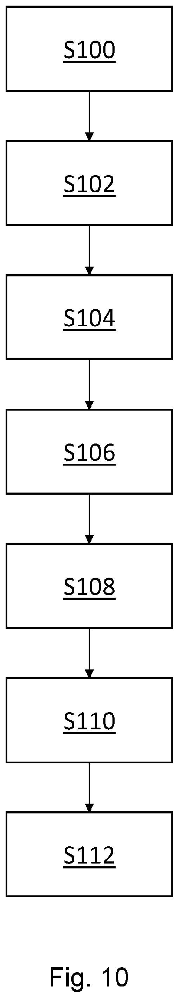

Figur 10 zeigt einen Verfahrensablauf zur Herstellung eines Filterelements 100 nach einem Ausführungsbeispiel der Erfindung.

In Schritt S100 erfolgt das Bereitstellen eines, insbesondere plissierten, Filtermediumkörpers 40 mit einem geschlossenen Umfang, das einen Innenraum 42 umschließt.

In Schritt S102 erfolgt das Bereitstellen eines Stützelements 50 mit einem Dämpfer-Aufnahmebereich 60 und einem Körper-Aufnahmebereich 58.

In Schritt S104 erfolgt das Einlegen eines Verdrängungskörpers 90 in den Körper-Aufnahmebereich 58 im Inneren des Stützelements 50 in den Bereich, an dem die zweite Endscheibe 20 befestigt werden soll.

In Schritt S106 erfolgt das Anbringen eines Dämpfungselements 80 an dem Dämpfer-Aufnahmebereich 60 an einer Außenseite des Stützelements 50.

Das Einlegen eines Verdrängungskörpers 90 und das Anbringen des Dämpfungselements 80 kann auch in umgekehrter Reihenfolge erfolgen.

In Schritt S108 erfolgt das Einlegen des Stützelements 50 in den Innenraum 42 des Filtermediums 40 mit Verdrängungskörper 90 im Körper-Aufnahmebereich 58 im Inneren des Stützelements 50 und Dämpfungselement 80 am Dämpfer-Aufnahmebereich 60.

In Schritt S110 erfolgt das Positionieren einer ersten Endscheibe 10 an einer Stirnseite 44 und einer zweiten Endscheibe 20 an einer gegenüberliegenden Stirnseite 46 des Filtermediums 40.

In Schritt S112 erfolgt das Zusammenführen von erster Endscheibe 10, Filtermedium 40 und zweiter Endscheibe 20 unter Einwirken eines Schweißprozesses, insbesondere eines Spiegelschweißprozesses, bis das Filtermedium 40 mit seinen Stirnseiten 44, 46 mit den Endscheiben 10, 20 dicht verschmolzen ist.

Beim Schweißprozess dient eine Wirkverbindung einer Kontur 26 der zweiten Endscheibe 20 und einer Gegenkontur 56 des Stützelements 50 als Endanschlag für die zweite Endscheibe 20. Dabei wird das Stützelement 50 mit der zweiten Endscheibe 20 während des Schweißvorgangs verklipst, indem eine Kontur 26 der zweiten Endscheibe 20 und eine Gegenkontur 56 des Stützelements 50 beim Zusammenführen von Endscheibe 20 und Filtermedium 40 übereinander geschoben werden.

### Bezugszeichen

- 10: Endscheibe
- 12: Stutzen
- 14: Axialsicherung
- 16: Dichtungsnut
- 18: Dichtring
- 20: Endscheibe
- 22: Ringelement
- 24: Rillenstruktur
- 26: Kontur
- 28: Zahn
- 32: Längsrichtung
- 40: Filtermediumkörper
- 42: Innenraum
- 44: Stirnseite
- 46: Stirnseite
- 48: Filtermedium
- 50: Stützelement
- 52: Fortsatz
- 54: Axialsicherung
- 55: Zahn
- 56: Gegenkontur
- 58: Körper-Aufnahmebereich
- 60: Dämpfer-Aufnahmebereich
- 70: Endanschlag
- 72: Durchbruch
- 74: Absatz
- 80: Dämpfungselement
- 82: Vorsprung
- 84: geteilter Vorsprung
- 86: Spalt
- 90: Verdrängungskörper
- 92: Zylinderbereich
- 94: Zapfen
- 96: Zapfen
- 100: Filterelement
- 1000: Filtersystem
- 1010: Gehäuse
- 1012: Topf
- 1014: Deckel
- 1200: Heizelement
- S100: Bereitstellen
- S102: Bereitstellen
- S104: Einlegen
- S106: Anbringen
- S108: Einlegen
- S110: Positionieren
- S112: Zusammenführen

## Patentansprüche

1. Filterelement (100) zur Reinigung eines Fluids, insbesondere einer Harnstoffwasser-Lösung, aufweisend eine erste, insbesondere offene Endscheibe (10) und eine zweite, insbesondere geschlossene Endscheibe (20), die in einer Längsrichtung (32) voneinander beabstandet sind,
wobei zwischen den Endscheiben (10, 20) ein Filtermediumkörper (40) mit einem Filtermedium (48) mit einem geschlossenen Umfang dichtend angeordnet ist, das einen Innenraum (42) umschließt,
wobei in dem Innenraum (42) ein Stützelement (50) angeordnet ist, welches eine Axialsicherung (54) zur Wirkverbindung mit einer Axialsicherung (14) der ersten Endscheibe (10) aufweist,
wobei das Stützelement (50) mit einem Fortsatz (52) mit seiner Axialsicherung (54) in einen sich in Längsrichtung (32) von dem Filtermediumkörper (40) weg erstreckenden Stutzen (12) mit der Axialsicherung (14) der ersten Endscheibe (10) ragt,
**dadurch gekennzeichnet,**
**dass** die Axialsicherung (54) des Fortsatzes (52) des Stützelements (50) in Form von einem oder mehreren radial nach außen gerichteten Haken vorliegt,
wobei die Axialsicherung (14) der ersten Endscheibe (10) ein radial nach innen gerichteter Absatz ist, an dem die radial nach außen gerichteten Haken festhaken, wenn die erste Endscheibe (10) wegen einer Längenzunahme des Filtermediumkörpers (40) in Richtung der Haken sich bewegt,
und **dass** die zweite Endscheibe (20) ein in den Innenraum (42) ragendes Ringelement (22) mit einer Kontur (26) aufweist, die mit einer Gegenkontur (56) des Stützelements (50) einen Endanschlag (70) der zweiten Endscheibe (20) beim Verbinden des Filtermediumkörpers (40) mit der zweiten Endscheibe (20) bildet.

2. Filterelement nach Anspruch 1, **dadurch gekennzeichnet, dass** das Stützelement (50) das Ringelement (22) der zweiten Endscheibe (20) übergreift, insbesondere dass das Stützelement (50) mit seiner Gegenkontur (56) über die Kontur (26) des Ringelements (22) der zweiten Endscheibe (20) greift.

3. Filterelement nach Anspruch 1 oder 2, **dadurch gekennzeichnet, dass** Kontur (26) und Gegenkontur (56) eine Rastverbindung bilden.

4. Filterelement nach einem der vorhergehenden Ansprüche, **dadurch gekennzeichnet, dass** das Stützelement (50) an der zweiten Endscheibe (20) in seinem Inneren einen Körper-Aufnahmebereich (58) für wenigstens einen Verdrängungskörper (90) aufweist.

5. Filterelement nach Anspruch 4, **dadurch gekennzeichnet, dass** der Verdrängungskörper (90) aus einem Elastomer gebildet ist, insbesondere aus EPDM.

6. Filterelement nach einem der vorhergehenden Ansprüche, **dadurch gekennzeichnet, dass** das Stützelement (50), insbesondere an seiner Außenseite, zwischen der zweiten Endscheibe (20) und der ersten Endscheibe (10), einen Dämpfer-Aufnahmebereich (60) zur Aufnahme wenigstens eines Dämpfungselements (80) aufweist.

7. Filterelement nach Anspruch 6, **dadurch gekennzeichnet, dass** das Dämpfungselement (80) als geschlitzter Ring ausgebildet ist, insbesondere dass das Dämpfungselement (80) als geschlitzter Ring ausgebildet ist, der mit Vorsprüngen (82) von einer Außenseite des Stützelements (50) her durch Durchbrüche (72) im Stützelement (50) durchgreift.

8. Filterelement nach Anspruch 6 oder 7, **dadurch gekennzeichnet, dass** das Dämpfungselement (80) aus einem Elastomer gebildet ist, insbesondere aus EPDM.

9. Filterelement nach einem der vorhergehenden Ansprüche, **dadurch gekennzeichnet, dass** das Filtermedium (48) vollsynthetisch ausgebildet ist.

10. Filtersystem (1000), insbesondere für Harnstoff-Wasser-Lösungen, mit einem Filterelement (100), mit einem Gehäuse (1010), das einen Einlass und einen Auslass aufweist, wobei das Gehäuse (1010) einen Gehäusetopf (1012) und einen Gehäusedeckel (1014) aufweist, wobei das Filterelement (100) dichtend zwischen Einlass und Auslass angeordnet ist, **dadurch gekennzeichnet, dass** das Filterelement (100) nach einem der vorhergehenden Ansprüche ausgebildet ist.

11. Filtersystem nach Anspruch 10, **dadurch gekennzeichnet, dass** ein Heizelement (1200), insbesondere ein Heizstab, in den Innenraum (42) des Filtermediumkörpers (40) eingeführt ist, wobei ein freies Ende des Heizelements (1200) von einem Dämpfungselement (80) umgeben ist, das an einem Stützelement (50) des Filterelements (100) angeordnet ist.

12. Verfahren zur Herstellung eines Filterelements (100) nach einem der Ansprüche 1 bis 9, **gekennzeichnet durch**
Bereitstellen eines, insbesondere plissierten, Filtermediumkörpers (40) mit einem geschlossenen Umfang, das einen Innenraum (42) umschließt,
Bereitstellen eines Stützelements (50) mit einem Dämpfer-Aufnahmebereich (60) und einem Körper-Aufnahmebereich (58);
Einlegen eines Verdrängungskörpers (90) in den Körper-Aufnahmebereich (58) im Inneren des Stützelements (50);
Anbringen eines Dämpfungselements (80) an dem Dämpfer-Aufnahmebereich (60) an einer Außenseite des Stützelements (50);
Einlegen des Stützelements (50) in den Innenraum (42) des Filtermediumkörpers (40) mit Verdrängungskörper (90) im Körper-Aufnahmebereich (58) im Inneren des Stützelements (50) und Dämpfungselement (80) am Dämpfer-Aufnahmebereich (60);
Positionieren einer ersten Endscheibe (10) an einer Stirnseite (44) und einer zweiten Endscheibe (20) an einer gegenüberliegenden Stirnseite (46) des Filtermediumkörpers (40);
Zusammenführen von erster Endscheibe (10), Filtermediumkörper (40) und zweiter Endscheibe (20) unter Einwirken eines Schweißprozesses, insbesondere eines Spiegelschweißprozesses, bis der Filtermediumkörper (40) mit seinen Stirnseiten (44, 46) mit den Endscheiben (10, 20) dicht verschmolzen ist.

13. Verfahren nach Anspruch 12, **dadurch gekennzeichnet, dass** eine Wirkverbindung einer Kontur (26) der zweiten Endscheibe (20) und einer Gegenkontur (56) des Stützelements (50) beim Schweißprozess als Endanschlag für die zweite Endscheibe (20) dient.

14. Verfahren nach Anspruch 12 oder 13, **dadurch gekennzeichnet, dass** das Stützelement (50) mit der zweiten Endscheibe (20) während des Schweißvorgangs verklipst wird, indem eine Kontur (26) der zweiten Endscheibe (20) und eine Gegenkontur (56) des Stützelements (50) beim Zusammenführen von Endscheibe (20) und Filtermediumkörper (40) übereinander geschoben werden.

## Claims

1. A filter element (100) for purifying a fluid, in particular a urea-water solution, featuring a first, in particular open, end disc (10) and a second, in particular closed, end disc (20), which are spaced apart from each other in a longitudinal direction (32),
wherein a filter medium body (40) is sealingly disposed between the end discs (10, 20) with a filter medium (48) having a closed periphery which encloses an interior space (42),
wherein in the interior space (42) a support member (50) is disposed, which features an axial securing means (54) for operative connection to an axial securing means (14) of the first end disc (10),
wherein the support member (50) projects with an extension (52) with its axial securing means (54) into a pipe connection (12) extending in the longitudinal direction (32) away from the filter medium body (40) to engage the axial securing means (14) of the first end disc (10),
**characterized in**
**that** the axial securing means (54) of the extension (52) of the support member (50) is present in the shape of one or more radially outwardly directed hooks, wherein the axial securing means (14) of the first end disc (10) is a radially inwardly directed shoulder onto which the radially outwardly directed hooks hook, when the first end disc (10) moves in the direction of the hooks due to a lengthening of the filter medium body (40),
and **that** the second end disc (20) features a ring element (22) projecting into the interior space (42) with a contour (26) that, together with a counter contour (56) of the support member (50), forms an end stop (70) of the second end disc (20) when the filter medium body (40) is connected to the second end disc (20).

2. The filter element according to claim 1, **characterized in that** the support member (50) engages the ring element (22) of the second end disc (20), in particular that the support member (50) engages the contour (26) of the annular element (22) of the second end disc (20) with its counter contour (56).

3. The filter element according to claim 1 or 2, **characterized in that** the contour (26) and the counter-contour (56) form a snap-in connection.

4. The filter element according to one of the preceding claims, **characterized in that** the support member (50) features on the second end disc (20) in its interior a body-receiving region (58) for at least one displacement body (90).

5. The filter element according to claim 4, **characterized in that** the displacement body (90) is made of an elastomer, in particular EPDM.

6. The filter element according to one of the preceding claims, **characterized in that** the support member (50), in particular on its exterior side, between the second end disc (20) and the first end disc (10), features a damper-receiving region (60) for receiving at least one damping element (80).

7. The filter element according to claim 6, **characterized in that** the damping element (80) is designed as a slotted ring, in particular that the damping element (80) is designed as a slotted ring that extends through breakthroughs (72) in the support member (50) with projections (82) from an exterior side of the support member (50).

8. The filter element according to claim 6 or 7, **characterized in that** the damping element (80) is made of an elastomer, in particular EPDM.

9. The filter element according to one of the preceding claims, **characterized in that** the filter medium (48) is fully synthetic.

10. A filter system (1000), in particular for urea-water solutions, with a filter element (100), with a housing (1010), which features an inlet and an outlet, wherein the housing (1010) features a housing pot (1012) and a housing cover (1014), wherein the filter element (100) is sealingly disposed between the inlet and the outlet, **characterized in that** the filter element (100) is designed according to one of the preceding claims.

11. The filter system according to claim 10, **characterized in that** a heating element (1200), in particular a heating rod, is inserted into the interior space (42) of the filter medium body (40), wherein a free end of the heating element (1200) is surrounded by a damping element (80) disposed on a support member (50) of the filter element (100).

12. A method for manufacturing a filter element (100) according to one of the claims 1 to 9, **characterized by**
providing a filter medium body (40), in particular a pleated one, with a closed periphery that encloses an interior space (42),
providing a support member (50) with a damper-receiving region (60) and a body-receiving region (58);
inserting a displacement body (90) into the body-receiving region (58) inside the support member (50);
attaching a damping element (80) to the damper-receiving region (60) on an exterior side of the support member (50);
inserting the support member (50) into the interior space (42) of the filter medium body (40) with the displacement body (90) in the body-receiving region (58) inside the support member (50) and the damping element (80) attached to the damper-receiving region (60);
positioning of a first end disc (10) on one front face (44) and of a second end disc (20) on an opposite front face (46) of the filter medium body (40);
joining the first end disc (10), the filter medium body (40 and the second end disc (20) by means of a welding process, in particular a mirror welding process, until the filter medium body (40) with its front faces (44, 46) is tightly fused to the end discs (10, 20) ).

13. The method according to claim 12, **characterized in that** an operative connection between a contour (26) of the second end disc (20) and a counter contour (56) of the support member (50) serves as an end stop for the second end disc (20) during the welding process.

14. The method according to claim 12 or 13, **characterized in that** the support member (50) is clipped to the second end disc (20) during the welding process by sliding a contour (26) of the second end disc (20) and a counter contour (56) of the support element (50) on top of each other when the end disc (20) and the filter medium body (40) are joined.

## Revendications

1. Élément filtrant (100) destiné à la purification d'un fluide, en particulier d'une solution aqueuse d'urée, présentant un premier disque d'extrémité (10), en particulier ouvert, et un deuxième disque d'extrémité (20), en particulier fermé, qui sont espacés l'un de l'autre dans une direction longitudinale (32),
un corps de milieu filtrant (40) étant disposé de manière étanche entre les disques d'extrémité (10, 20) avec un milieu filtrant (48) à périmètre fermé, qui entoure un espace intérieur (42),
un élément de support (50) présentant un dispositif de sécurité axiale (54) destiné à être relié de manière fonctionnelle à un dispositif de sécurité axiale (14) du premier disque d'extrémité (10), est disposé dans l'espace intérieur (42),
l'élément de support (50) s'étendant, avec son prolongement (52) doté de son dispositif de sécurité axiale (54), dans une tubulure (12) s'étendant dans la direction longitudinale (32) en s'écartant du corps de milieu filtrant (40), pour venir en prise avec le dispositif de sécurité axiale (14) de la première plaque d'extrémité (10),
**caractérisé en ce**
**que** le dispositif de sécurité axiale (54) du prolongement (52) de l'élément de support (50) se présente sous la forme d'un ou plusieurs crochets orientés radialement vers l'extérieur, le dispositif de sécurité axiale (14) du premier disque d'extrémité (10) étant un épaulement orienté radialement vers l'intérieur sur lequel s'accrochent les crochets orientés radialement vers l'extérieur, lorsque le premier disque d'extrémité (10) se déplace en direction des crochets en raison d'un allongement du corps de milieu filtrant (40),
et **que** le deuxième disque d'extrémité (20) présente un élément annulaire (22) faisant saillie dans l'espace intérieur (42) et présentant un contour (26) qui, avec un contour antagoniste (56) de l'élément de support (50), forme une butée d'extrémité (70) du deuxième disque d'extrémité (20) lors du raccordement du corps de milieu filtrant (40) au deuxième disque d'extrémité (20).

2. Élément filtrant selon la revendication 1, **caractérisé en ce que** l'élément de support (50) s'engage sur l'élément annulaire (22) du deuxième disque d'extrémité (20), en particulier **en ce que** l'élément de support (50) s'engage, par son contour antagoniste (56), sur le contour (26) de l'élément annulaire (22) du deuxième disque d'extrémité (20).

3. Élément filtrant selon la revendication 1 ou 2, **caractérisé en ce que** le contour (26) et le contour antagoniste (56) forment un assemblage par encliquetage.

4. Élément filtrant selon l'une quelconque des revendications précédentes, **caractérisé en ce que** l'élément de support (50) présente, à l'intérieur de la deuxième plaque d'extrémité (20), une zone pour recevoir des corps (58) destinée à recevoir au moins un corps de déplacement (90).

5. Élément filtrant selon la revendication 4, **caractérisé en ce que** le corps de déplacement (90) est fait d'un élastomère, en particulier d'EPDM.

6. Élément filtrant selon l'une quelconque des revendications précédentes, **caractérisé en ce que** l'élément de support (50) présente, en particulier sur sa face extérieure, entre le deuxième disque d'extrémité (20) et le premier disque d'extrémité (10), une zone de réception d'amortisseur (60) destinée à recevoir au moins un élément d'amortissement (80).

7. Élément filtrant selon la revendication 6, **caractérisé en ce que** l'élément d'amortissement (80) est réalisé sous la forme d'un anneau fendu, en particulier **en ce que** l'élément d'amortissement (80) est réalisé sous la forme d'un anneau fendu qui s'engage, avec des saillies (82), depuis une face extérieure de l'élément de support (50) à travers des passages (72) dans l'élément de support (50).

8. Élément filtrant selon la revendication 6 ou 7, **caractérisé en ce que** l'élément d'amortissement (80) est constitué d'un élastomère, en particulier d'EPDM.

9. Élément filtrant selon l'une quelconque des revendications précédentes, **caractérisé en ce que** le milieu filtrant (48) est entièrement synthétique.

10. Système de filtre (1000), en particulier pour des solutions aqueuse d'urée, avec un élément filtrant (100) et un boîtier (1010), qui présente une entrée et une sortie, le boîtier (1010) présentant un pot de boîtier (1012) et un couvercle de boîtier (1014), l'élément filtrant (100) étant disposé de manière étanche entre l'entrée et la sortie, **caractérisé en ce que** l'élément filtrant (100) est conçu selon l'une quelconque des revendications précédentes.

11. Système de filtre selon la revendication 10, **caractérisé en ce qu'**un élément de chauffage (1200), en particulier une tige chauffante, est introduit dans l'espace intérieur (42) du corps de milieu filtrant (40), une extrémité libre de l'élément chauffant (1200) étant entourée par un élément d'amortissement (80) qui est disposé sur un élément de support (50) de l'élément filtrant (100).

12. Procédé de fabrication d'un élément filtrant (100) selon l'une quelconque des revendications 1 à 9, **caractérisé par**
la mise à disposition d'un corps de milieu filtrant (40), en particulier plissé, avec un périmètre fermé et renfermant un espace intérieur (42),
la mise à disposition d'un élément de support (50) avec une zone de réception d'amortisseur (60) et une zone pour recevoir des corps (58);
l'insertion d'un corps de déplacement (90) dans la zone pour recevoir des corps (58) à l'intérieur de l'élément de support (50);
la fixation d'un élément d'amortissement (80) à la zone de réception d'amortisseur (60) sur une face extérieure de l'élément de support (50); I'insertion de l'élément de support (50) dans l'espace intérieur (42) du corps de milieu filtrant (40) avec le corps de déplacement (90) situé dans la zone pour recevoir des corps (58) à l'intérieur de l'élément de support (50) et l'élément d'amortissement (80) fixé à la zone de réception d'amortisseur (60);
le positionnement d'un premier disque d'extrémité (10) sur une face frontale (44) et d'un deuxième disque d'extrémité (20) sur une face frontale opposée (46) du corps de milieu filtrant (40);
l'assemblage du premier disque d'extrémité (10), du corps de milieu filtrant (40) et du deuxième disque d'extrémité (20) par un procédé de soudage, en particulier un procédé de soudage-miroir, jusqu'à ce que le corps de milieu filtrant (40) avec ses faces frontales (44, 46) soit solidement soudé aux disques d'extrémité (10, 20).

13. Procédé selon la revendication 12, **caractérisé en ce qu'**une liaison fonctionnelle entre un contour (26) du deuxième disque d'extrémité (20) et un contour antagoniste (56) de l'élément de support (50) sert, lors du procédé de soudage, de butée d'extrémité pour le deuxième disque d'extrémité (20).

14. Procédé selon la revendication 12 ou 13, **caractérisé en ce que** l'élément de support (50) est clipsé sur le deuxième disque d'extrémité (20) pendant le processus de soudage, en emmanchant un contour (26) du deuxième disque d'extrémité (20) et un contour antagoniste (56) de l'élément de support (50) l'un sur l'autre lors de l'assemblage du disque d'extrémité (20) et du corps de milieu filtrant (40).
